# EUROPÄISCHE PATENTANMELDUNG

(11) **EP 0 572 796 A1**
(43) Veröffentlichungstag der Anmeldung: **08.12.1993**
(21) Anmeldenummer: 93106853.0
(22) Anmeldetag: 28.04.1993
(51) Int. Cl.: G01P 3/484, G01P 13/02, G01D 5/249

(54) **Drehbarer Codierer**

(30) Priorität: 26.05.1992 DE 9207093 U
(71) Anmelder: GRUNDIG E.M.V. Elektro-Mechanische Versuchsanstalt Max Grundig holländ. Stiftung & Co. KG., D-90762 Fürth (DE)
(72) Erfinder: Wiekenberg, Günther, Dipl.-Ing. (FH), GRUNDIG EMV, W-8510 Fürth/Bay. (DE)
(74) Vertreter: Eichstädt, Alfred

(57) **Zusammenfassung**

Für die Steuerung von Geräten mit einer Vielzahl von Betriebsarten, wie z.B. die Bandbetriebsarten eines Videobandgeräts, werden Betriebsartenwählschalter verwendet, die neben der Auswahl einer Betriebsart auch die Funktionssteuerung der jeweils ausgewählten Betriebsart erlauben. Derartige Betriebsartenwählschalter werden durch Verwendung von zwei drehbaren Codiereinrichtungen mit photoelektrischen Sensoren oder mittels Schleifern und Kontaktbahnen realisiert.

Bei den bekannten Realisierungen ist es nachteilig, daß die drehbaren Codiereinrichtungen entweder aufwending oder störanfällig sind.

Bei der erfindungsgemäßen drehbaren Codiereinrichtung werden diese Nachteile dadurch vermieden, daß als Sensoren einfache Tastschalter (51,52) verwendet werden, die über Schaltnocken (N) auf der drehbaren Codiereinrichtung (C) betätigt werden.

## Beschreibung

Die Erfindung betrifft einen drehbaren Codierer zur Abgabe von drehrichtungs- und drehgeschwindigkeitsabhängigen Impulsen, mit einer drehbaren Codiereinrichtung sowie mit mit dieser zusammenwirkenden Sensoren.

Derartige Codierer sind in der Digitaltechnik als Digital-Encoder bekannt. Sie bestehen aus einer drehbaren Scheibe, die mechanisch durch Schleifkontakte, optisch durch opto-elektrische Sensoren, magnetisch auf dem Halleffekt beruhend oder auch induktiv bzw. kapazitiv abtastbar sind. Die Scheibe wird dabei an dem impulsauslösenden Element wie Schleifer, Photodiode, Hallelement usw. vorbeibewegt. Es handelt sich dabei um zwei Sensoren, die um einen bestimmten Winkel versetzt angeordnet sind. Aus den von diesen gelieferten phasenverschobenen Impulsreihen kann auf die Drehrichtung und den Drehwinkel des Codierers geschlossen werden, so daß z.B. ein an diesen angeschlossener Zähler aufwärts oder abwärts zählt, woraufhin das Zählergebnis ausgewertet werden kann.

Drehbare Codierer der vorbeschriebenen Arten sind in der Digitalelektronik weit verbreitet und gewinnen auch in der Unterhaltungselektronik mehr an Bedeutung. In der Unterhaltungselektronik ist es üblich, eine weitere Schaltfunktion hinzuzufügen, die es entweder durch Zug oder Druck am Bedienknopf des drehbaren Codierers oder durch einen zweiten drehbaren Codierer erlaubt, eine Umschaltung vorzunehmen. Damit kann erreicht werden, daß komplexe Bedienungsvorgänge mit einem Bedienelement vorgenommen werden können. Neben der Auswahl einer bestimmten Betriebsart ist dann auch die Funktionsbeeinflussung der gewählten Betriebsart möglich.

Komplexe Bedienvorgänge lassen sich beispielsweise bei einem Videobandgerät finden, das eine Vielzahl von Bandbetriebsarten aufweist, wie z.B. Wiedergabe, Zurückspulen, schneller Bildvorlauf usw. Üblicherweise ist für jede der Betriebsarten ein Wählschalter vorgesehen. Wird ein bestimmter Wählschalter betätigt, so wird das entsprechende Steuersignal einem Motor zugeführt und das Band wird mit einer bestimmten Geschwindigkeit in eine bestimmte Richtung bewegt. Besonders für Schneidezwecke ist es notwendig, bestimmte Bandstellen aufzufinden oder einen bestimmten Bereich eines mit einer Aufzeichnung versehenen Bandes bei einer gewünschten Bandgeschwindigkeit zu überprüfen. Die Auswahl der Betriebsarten mit den üblichen Wählschaltern ist dazu nicht ausreichend, da die nötige, sehr feine Steuerung des Bandes kaum möglich ist. Um diese Schwierigkeiten zu umgehen, muß ein zusätzlicher Steuergenerator vorgesehen werden, der die manuelle Funktionsbeeinflussung der ausgewählten Betriebsart erlaubt. Für die Einstellung der Bandbetriebsarten bedeutet dies, daß die Motorsteuersignale mittels des Steuergenerators durch den drehbaren Codierer veränderbar sein müssen.

Bei den bekannten drehbaren Codierern ist es nachteilig, daß ihr Aufbau entweder kompliziert und damit teuer ist, oder daß sie störanfällig sind. Ersteres gilt beispielsweise für drehbare Codierer mit opto-elektrischen Sensoren, letzteres für Codierer mit Schleifern, bei denen beim Auflaufen, während des Überlaufens und beim Verlassen der Kontaktbahnen Störungen auftreten.

Aufgabe der vorliegenden Erfindung ist es deshalb, einen drehbaren Codierer anzugeben, bei dem der Aufwand im Vergleich zu den bekannten Lösungen reduziert wird und der konstruktionsbedingt weniger störanfällig ist.

Die Lösung der Aufgabe wird bei dem erfindungsgemäßen drehbaren Codierer dadurch erreicht, daß als Sensoren einfache Tastschalter, beispielsweise Mikroschalter, verwendet werden, die über Schaltnocken auf der drehbaren Scheibe betätigt werden.

Der Vorteil der vorliegenden Erfindung ist insbesondere darin zu sehen, daß es im Vergleich zum Stand der Technik zu einer erheblichen Verringerung des Aufwands kommt, wodurch zudem ein sehr flacher Aufbau des Codierers ermöglicht wird. Gegenüber bekannten Lösungen mit aktiven Bauteilen (z.B. opto-elektrische Codierer) kann mit kleineren Spannungen und Strömen gearbeitet werden, Störungen (verursacht z.B. durch Schleifkontakte) werden erheblich reduziert. Darüberhinaus bietet die vorliegende Erfindung den Vorteil, daß Tastschalter und drehbarer Teil des Codierers getrennt voneinander montiert werden können, wodurch der Herstellungsaufwand nochmals verringert wird.

Im folgenden wird die Erfindung anhand von Figuren näher beschrieben.

Es zeigen:
Figur 1 eine erste Ausführungsform eines erfindungsgemäßen drehbaren Codierers,
Figur 2 den Spannungsverlauf an den Schaltern, wie er durch Drehen der Codiereinrichtung nach Figur 1 erzeugt wird,
Figur 3 einen Ausschnitt aus einer Abwicklung des drehbaren Codierers nach Figur 1,
Figur 4 eine zweite Ausführungsform eines erfindungsgemäßen drehbaren Codierers,
Figur 5 eine dritte Ausführungsform eines erfindungsgemäßen drehbaren Codierers, und
Figur 6 den Spannungsverlauf an den Schaltern, wie er durch Drehen der Codiereinrichtung nach Figur 5 erzeugt wird.

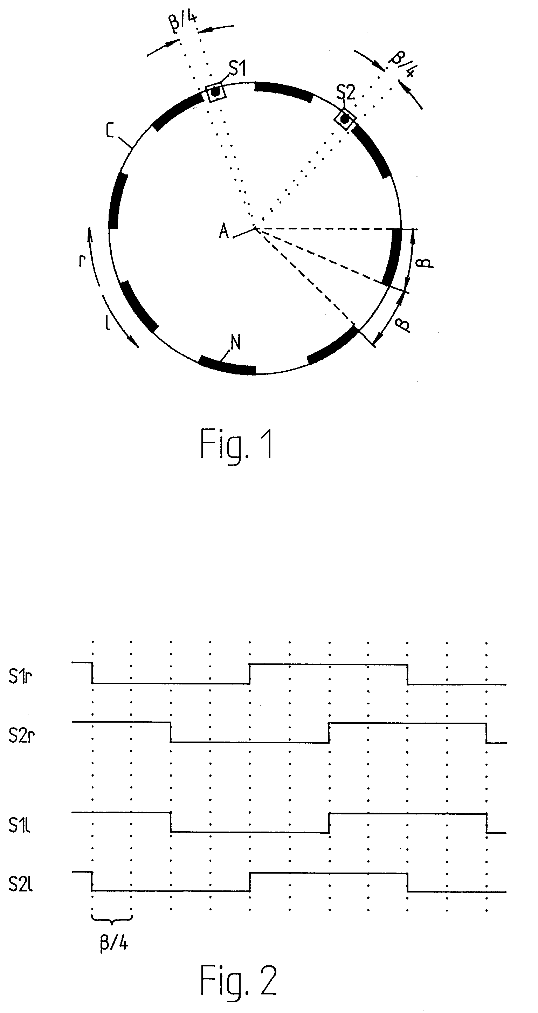

Die erfindungsgemäße erste Ausführungsform nach Figur 1 weist neben einer drehbaren Codierscheibe C zwei Schalter S1 und S2, beispielsweise Mikroschalter, auf. An der Unterseite der Scheibe C sind in gleichen Winkelabständen β Schaltnocken N angebracht. Die Schaltnocken N sind so ausgebildet, daß mit jeder Schaltnocke N eine Betätigung eines der Schalter S1 oder S2 für eine Drehung der Scheibe C um einen Winkel β möglich ist. Die Auflösung des Codierers ist durch den Winkel β festgelegt. Für eine Steigerung der Auflösung des drehbahren Codierers muß die Anzahl der Schaltnocken N erhöht werden, d.h. der Winkel β muß verkleinert werden.

Wird die Scheibe C um ihre Achse A gedreht, so werden die Schalter S1 und S2 durch die Nocken N in einer Richtung parallel zur Drehachse A betätigt. An den Schaltern S1 und S2 kann dabei ein Spannungsverlauf festgestellt werden, wie in Figur 2 dargestellt. Bei einer Drehung der Scheibe C in die in Figur 1 dargestellte Richtung r fällt am zunächst offenen Schalter S1 die angelegte Schaltspannung ab, nach einer Drehung um den Winkel β/4 wird der Schalter S1 geschlossen, die Spannung am Schalter S1 sinkt auf null, um nach einer weiteren Drehung um den Winkel β erneut am wieder geöffneten Schalter S1 abzufallen. Der Spannungsverlauf für Schalter S1 bei Drehung in Richtung r ist mit S1r in Figur 2 gekennzeichnet, der Spannungsverlauf an Schalter S2 mit S2r. Für eine Drehung in Richtung l geben die mit S1l und S2l gekennzeichneten Spannungsverläufe den Schaltzustand der Schalter S1 und S2 an.

Durch die Auswertung der bei der Drehung der Scheibe C entstandenen Spannungsverläufe können Drehwinkel, Drehgeschwindigkeit und Drehrichtung ermittelt werden. Um den Drehwinkel bestimmen zu können, muß die Anzahl der Spannungswechsel ermittelt und mit dem Winkel β multipliziert werden. Wird die Anzahl der Spannungswechsel innerhalb eines gewissen Zeitraums betrachtet, so erhält man Auskunft über die Drehgeschwindigkeit. Die Drehrichtung der Scheibe C läßt sich aus der unterschiedlichen Phasenlage der Spannungsverläufe an den Schaltern S1 und S2 ermitteln, die wegen des Versatzes der Schalter um den Winkel β/4, wie in Figur 1 dargestellt, entsteht.

Die in Figur 1 dargestellte Anordnung der Schalter ist auch in anderen als den dargestellten Anordnungen möglich, insbesondere sind andere Winkelverhältnisse als die angegebenen Winkel β bzw. β/4 möglich.

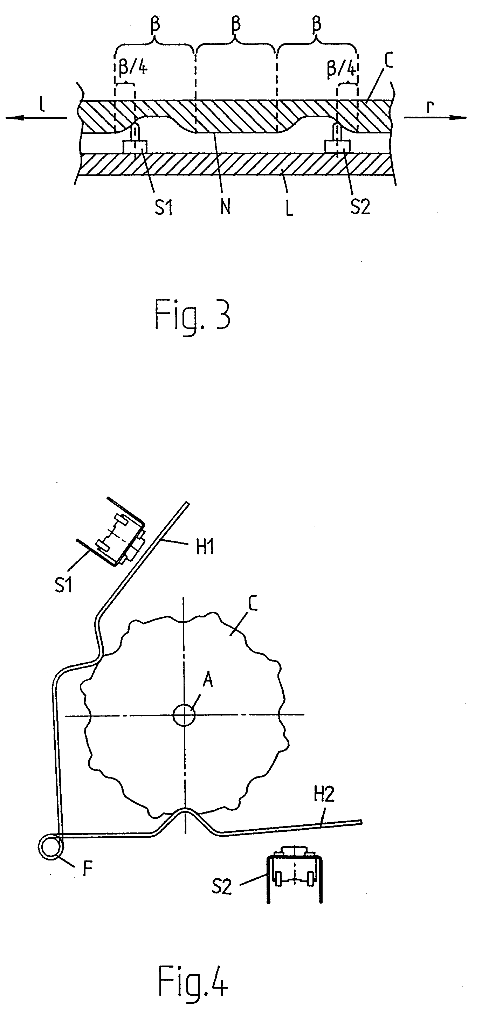

Zum besseren Verständnis der Funktionsweise der Betätigung der Schalter durch die Schaltnocken ist in Figur 3 ein Ausschnitt aus der Abwicklung des drehbaren Codierers nach Figur 1 dargestellt.

Die obere schraffierte Fläche stellt die drehbare Codierscheibe C dar, die untere schraffierte Fläche ist die Montageebene L der Schalter S1 und S2, die beispielsweise von einer Leiterplatte gebildet werden kann, die der elektrischen Verbindung der Schalter S1 und S2 mit der Einrichtung zur Auswertung der Schaltersignale dient. Bei der Drehung der Scheibe C wird diese über die Schalter S1 und S2 in den angedeuteten Richtungen r und l bewegt. Die Schalter S1 und S2 werden von den Schaltnocken N betätigt, die so ausgestaltet sind, daß jeder Schalter jeweils während einer Drehung der Scheibe C um den Drehwinkel β betätigt wird und während des darauffolgenden Drehwinkels β einen unbetätigten Zustand einnimmt. Wegen der um den dargestellten Winkel β/4 versetzten Anordnung der Schalter S1 und S2 ergibt sich für die Schaltzustände der Schalter S1 und S2 eine Phasenverschiebung um β/2. Durch eine geeignete Gestaltung der Flanken (z.B. exponentialförmiger Verlauf wie in Figur 3) der Schaltnocken kann erreicht werden, daß Schaltprellen, das beim Ein- und Ausschalten der Schalter auftritt, stark reduziert wird. Verbleibendes Schaltprellen kann durch an sich bekannte Maßnahmen zum Entprellen der Schaltsignale weiter verringert werden.

Figur 4 stellt eine zweite Ausführungsform eines erfindungsgemäßen drehbaren Codierers dar. Bei dieser Ausführungsform lenkt die mittels der Achse A drehbare Codierscheibe C Hebelarme H1 und H2 aus, welche die Schalter S1 und S2 senkrecht zur Richtung der Drehachse A betätigen. Um die gewünschte verkoppelte Schaltfunktion der beiden Schalter S1 und S2 zu erreichen, sind die Hebelarme H1 und H2 miteinander verbunden. Dies kann zweckmäßigerweise wie dargestellt mittels einer Feder F geschehen. Von besonderem Vorteil ist bei der Verwendung von Hebelarmen, daß die Schaltnocken eine geringere Höhe als bei einer direkten Betätigung der Schalter aufweisen können, da durch die Hebelame der Auslöseweg vergrößert wird.

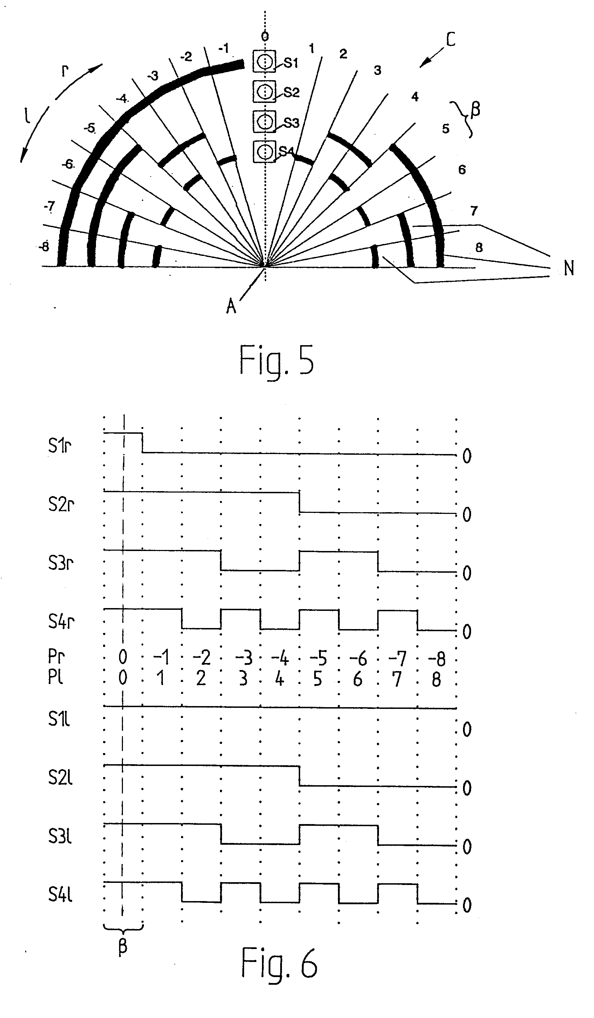

Die in Figur 5 dargestellte erfindungsgemäße dritte Ausführungsform zeigt einen drehbaren Codierer, der für einen Drehwinkel von 180^{o} ausgelegt ist und beispielsweise für die Auswahl einzustellender Funktionen verwendet werden kann. Die Codierscheibe dieses drehbaren Codierers weist vier Codierspuren mit unterschiedlich angeordneten Schaltnocken N auf. Die Schaltnocken der einzelnen Codierspuren sind zudem verschieden ausgebildet. Die Schaltnocken der vierten Codierspur gestatten die Betätigung eines Schalters S4 für einen Drehwinkel β der Codierscheibe. Darstellungsgemäß kann ein Schalter S3 für einen Drehwinkel 2β durch die Schaltnocken der dritten Codierspur betätigt werden, zwei weitere Schalter S2 bzw. S1 für einen Drehwinkel 4β bzw. 8β. Durch die Anzahl der Codierspuren und die Anzahl der auf den jeweiligen Codierspuren vorhandenen Schaltnocken sowie deren Größe werden die möglichen Schaltpositionen festgelegt. Bei Verdoppelung der Anzahl der Schaltnocken von Codierspur zu Codierspur und gleichzeitiger Halbierung der Größe der Schaltnocken ist die mögliche Anzahl der Schaltpositionen gegeben durch die Potenz zur Basis zwei mit der Anzahl der Codierspuren als Exponent. Für die Realisierung von 17 Schaltpositionen -8,-7,...,0,...,7,8 wie im dargestellten Beispiel werden also vier Codierspuren benötigt. Diese ergeben 16 Schaltpositionen zuzüglich der Nullposition. Jede der Schaltpositionen -8,-7,...,0,...,7,8 ist für einen Drehwinkel β aktiv.

Figur 6 stellt die Spannungsverläufe von einer an die Schalter S1 bis S4 angelegten Schaltspannung in Abhängigkeit von der Schaltposition und der Drehrichtung dar. Erfolgt, ausgehend von Schaltposition 0, eine Drehung der Codierscheibe in die mit r gekennzeichnete Drehrichtung, so fällt am zunächst geöffneten Schalter S1 die angelegte Schaltspannung ab. Nach einer Drehung um den Winkel β/2 wird der Schalter S1 geschlossen, die Spannung am Schalter S1 sinkt auf null und behält diesen Wert bis zur Endstellung in Schaltposition -8 bei. Der Spannungsverlauf für Schalter S1 bei Drehung in Richtung r ist mit S1r in Figur 6 gekennzeichnet, die Spannungsverläufe an den anderen Schaltern mit S2r, S3r und S4r. Für eine Drehung in Richtung l, ausgehend von Schaltposition 0, geben die mit S1l, S2l, S3l und S4l gekennzeichneten Spannungsverläufe den Schaltzustand der Schalter S1 bis S4 an. Pr bzw. Pl kennzeichnet die jeweilige Stellung der Codierscheibe bei einer Drehung in Richtung r bzw. l.

Durch die Auswertung der jeweiligen Schaltzustände aller vier Schalter S1 bis S4 können Drehwinkel und Drehrichtung bestimmt werden. Die Drehgeschwindigkeit kann ermittelt werden, wenn die Spannungswechsel an einem der Schalter S1 bis S4 innerhalb eines gewissen Zeitraums betrachtet werden. Das beste Ergebnis erhält man, wenn die Spannungswechsel an Schalter S4 ausgewertet werden, da, verglichen mit den anderen Schaltern S1 bis S3, mehr Spannungswechsel pro Drehung auftreten, wodurch sich die beste zu erreichende Auflösung ergibt.

Neben den beschriebenen Ausführungen für einen drehbaren Codierer mit Schaltern als Sensoren sind andere Ausführungsformen möglich und ohne erfinderisches Zutun vom Beschriebenen ableitbar. Beispielsweise können die Schalter wie in der zweiten Ausführungsform senkrecht zur Richtung der Drehachse der Codierscheibe betätigt werden, allerdings direkt durch die Schaltnocken der Codierscheibe. Bei dem drehbaren Codierer nach der dritten Ausführungsform kann statt eines Drehwinkels von 180^{o} jeder andere Drehwinkel möglich sein, insbesondere ein Drehwinkel von 360^{o} ohne Nullstellung. Weitere Gestaltungsmöglichkeiten ergeben sich darüberhinaus für die Schaltnocken, sowohl deren Form als auch deren Anzahl betreffend. Ebenso ist es möglich, mehrere drehbare Codierer miteinander zu verbinden, so daß diese eine gemeinsame Drehachse aufweisen, an der sie koaxial gelagert und drehbar sind.

## Patentansprüche

1. Drehbarer Codierer zur Abgabe von drehrichtungs- und drehgeschwindigkeitsabhängigen Impulsen, mit einer drehbaren Codiereinrichtung sowie mit mit dieser zusammenwirkenden Sensoren,
**dadurch gekennzeichnet**,
daß die Sensoren mechanisch betätigbare Schalter (S1,S2 oder S1,S2,S3,S4) sind,
und daß die drehbare Codiereinrichtung (C) zur Betätigung der Schalter (S1,S2 oder S1,S2,S3,S4) mit in gleichen Winkelabständen (β oder β,2β,4β,8β) angeordneten Vertiefungen und/oder Erhöhungen (N) versehen ist.

2. Drehbarer Codierer nach Anspruch 1,
**dadurch gekennzeichnet**,
daß die mechanisch betätigbaren Schalter (S1,S2 oder S1,S2,S3,S4) Mikroschalter sind.

3. Drehbarer Codierer nach Anspruch 1 oder 2,
**dadurch gekennzeichnet**,
daß die zu den Vertiefungen und/oder Erhöhungen (N) um einen Winkel (β/4) versetzt angeordneten Schalter (S1,S2) von den Vertiefungen und/oder Erhöhungen (N) einer gemeinsamen Codierspur betätigt werden.

4. Drehbarer Codierer nach Anspruch 1 oder 2,
**dadurch gekennzeichnet**,
daß die, bezüglich der Drehachse (A) in radialer Richtung gesehen, in einer Reihe angeordneten Schalter (S1,S2,S3,S4) von den Vertiefungen und/oder Erhöhungen (N) je einer Codierspur pro Schalter (S1,S2,S3,S4) betätigt werden.

5. Drehbarer Codierer nach einem der Ansprüche 1 bis 4,
**dadurch gekennzeichnet**,
daß die drehbare Codiereinrichtung (C) scheiben- oder ringförmig ausgestaltet ist und die Vertiefungen und/oder Erhöhungen (N) zur Betätigung der Schalter (S1,S2 oder S1,S2,S3,S4) entlang des Außenumfangs der drehbaren Codiereinrichtung (C) parallel zur Drehachse (A) der drehbaren Codiereinrichtung (C) angeordnet sind.

6. Drehbarer Codierer nach einem der Ansprüche 1 bis 4,
**dadurch gekennzeichnet**,
daß die drehbare Codiereinrichtung (C) scheiben- oder ringförmig ausgestaltet ist und die Vertiefungen und/oder Erhöhungen (N) zur Betätigung der Schalter (S1,S2 oder S1,S2,S3,S4) entlang des Außenumfangs der drehbaren Codiereinrichtung (C) senkrecht zur Drehachse (A) der drehbaren Codiereinrichtung (C) angeordnet sind.

7. Drehbarer Codierer nach einem der Ansprüche 1 bis 6,
**dadurch gekennzeichnet**,
daß die Betätigung der Schalter (S1,S2 oder S1,S2,S3,S4) über Hebelarme erfolgt, die von der drehbaren Codiereinrichtung (C) ausgelenkt werden.

8. Drehbarer Codierer nach den Ansprüchen 6 und 7,
**dadurch gekennzeichnet**,
daß die Hebelarme (H1,H2) mittels einer Feder (F) gekoppelt sind.

9. Drehbarer Codierer nach einem der Ansprüche 1 bis 8,
**dadurch gekennzeichnet**,
daß mehrere drehbare Codiereinrichtungen sowie die zugehörigen Schalter über eine gemeinsame Drehachse koaxial bedienbar sind.
